# EUROPÄISCHE PATENTSCHRIFT

(11) **EP 2 743 056 B1**
(45) Veröffentlichungstag und Bekanntmachung des Hinweises auf die Patenterteilung: **24.02.2016**
(21) Anmeldenummer: 13195511.4
(22) Anmeldetag: 03.12.2013
(51) Int. Cl.: B29C 49/06, B29C 49/42, B29C 49/78, B29D 22/00

(54) **Optimierte Vorformlingzuführung**
Optimised pre-form guide
Acheminement de préforme optimisé

(30) Priorität: 14.12.2012 DE 102012024420
(43) Veröffentlichungstag der Anmeldung: 18.06.2014
(73) Patentinhaber: Krones Aktiengesellschaft, 93073 Neutraubling (DE)
(72) Erfinder: Schönberger, Wolfgang, 93073 Neutraubling (DE); Spitzer, Thomas, 93073 Neutraubling (DE)
(74) Vertreter: Benninger, Johannes

(56) Entgegenhaltungen:
- EP-A1- 0 237 459
- EP-A2- 2 284 120
- EP-A2- 2 441 563
- DE-A1-102006 025 010
- DE-A1-102008 021 527
- DE-A1-102009 016 593

## Beschreibung

Die vorliegende Erfindung bezieht sich auf ein Verfahren und eine Vorrichtung zum Transportieren von Kunststoffvorformlingen zu einer Streckblasmaschine, in der die Vorformlinge nach einer thermischen Konditionierung innerhalb einer Blasform von einer Reckstange gereckt und durch Blasdruckeinwirkung in Behälter umgeformt werden. In der Streckblastechnik ist es heute üblich, sogenannte Kunststoffvorformlinge (beispielsweise aus PP oder PET) zu verarbeiten, die in der Regel in einem vorgelagerten Prozessschritt, beispielsweise in einem Spritzgussverfahren, hergestellt wurden. Derartige Kunststoffvorformlinge weisen auf einer Seite einen geschlossenen Boden sowie am entgegen gesetzten Ende eine Mündung auf, die den Vorformling durch eine Öffnung abschließt. Jeder Kunststoffvorformling ist bereits mit einer Mündung ausgebildet, die im Wesentlichen der Mündung des fertigen Behältnisses entspricht. Die Mündung weist dabei vorteilhafterweise ein Gewinde und einen Tragring bzw. eine Transportnut auf, um den Vorformling bzw. den Behälter während der Herstellung transportieren zu können bzw. um die gefüllte Flasche verschließen zu können. Ein derartiges Gewinde weist dabei wenigstens einen Tragring und/oder wenigstens einen Sicherungsring und/oder wenigstens eine Nut auf, wodurch ein Greifen und/oder Führen des Vorformlings von außen ermöglicht wird.

Die Vorformlinge werden der Streckblasmaschine typischerweise über Zuführschienen zugeführt, entlang derer die Vorformlinge in einer räumlichen Orientierung mit der Mündung nach oben entlanggleiten. Eine Führung der Vorformlinge sowie eine Abstützung der Vorformlinge erfolgt typischerweise unter Verwendung von Stützelementen, die unterhalb eines Gewindes der Vorformlinge angeordnet sind.

Üblicherweise gleiten die Vorformlinge entlang der schräg angeordneten Zuführschienen aufgrund der Einwirkung der herrschenden Schwerkraft.

Um bei Blasmaschinen mit einer hohen Produktionskapazität eine zuverlässige Zuführung der Vorformlinge zu gewährleisten, werden relativ lange Zuführschienen verwendet, damit trotz der bei einer Bewegung der Vorformlinge entlang der Führungsschienen auftretenden Reibungskräfte ein ausreichender Staudruck der Vorformlinge im Übergang zu der vor der Erwärmungseinrichtung angeordneten Vereinzelungseinrichtung erreicht wird. Der hohe Staudruck ist zudem erforderlich, um die durch Störungen, wie beispielsweise durch das Auswerfen von verklemmten Vorformlingen, in der Zuführeinrichtung entstandenen Lücken schnell wieder schließen zu können.

Es ist weiterhin bereits bekannt, die Zuführschienen für den Transport von sehr kleinen und leichten Vorformlingen horizontal anzuordnen und ein geeignetes Antriebsmittel, wie beispielsweise einen Luftstrom, vorzusehen, um die Vorformlinge entsprechend anzutreiben. Dies ist beispielsweise aus der WO 2006/058512 A2 bekannt.

Tritt eine Störung in der Blasmaschine oder anderen nachgeordneten Maschinen auf, so wird - insbesondere bei geblockten Anlagen - auch der Transport der Kunststoffvorformlinge zu der Blasmaschine angehalten.

Dies geschieht derart, dass am Ende der Zuführschiene, also unmittelbar vor der Vereinzelungseinrichtung - beispielsweise einem Sägezahnstern - der die Vorformlinge vereinzelt und auf einen definierten Abstand bringt, ein Sperrfinger vorgesehen ist, der zwischen die Mündungen von zwei benachbarten Vorformlingen eingreift und somit den Vorformlingstrom anhält bis die Maschine wieder angefahren ist.

Diese seit langem bekannte Vorgehensweise zum Anhalten eines Vorformlingstroms stößt bei den höher werdenden Maschinengeschwindigkeiten allerdings an ihre Grenzen und es treten immer häufiger Probleme dadurch auf, dass der Sperrfinger nicht rechtzeitig zwischen zwei Mündungen trifft, sondern stattdessen direkt auf eine Mündung auftrifft und diese damit deformiert oder sogar aufspießt. Im schlimmsten Fall kann sogar der Sperrfinger oder die Zuführschiene beschädigt werden.

Durch den in der Zuführschiene erzeugten Staudruck sind die Vorformlinge unmittelbar hintereinander angeordnet und können somit nicht nach vorne oder hinten ausweichen, wenn der Sperrfinger eingefahren wird. Die Bewegung der Vorformlinge ist weiterhin seitlich durch die direkt unter dem Tragring angebrachte Zuführschiene begrenzt.

Derartige Probleme verzögern unweigerlich die Produktion, weil dann der Bediener eingreifen muss, um das jeweilige Problem zu beseitigen. Dadurch wird zudem der Wirkungsgrad der Maschine verringert.

Durch EP 2 441 563 A2 ist eine Vorrichtung zum Herstellen von Kunststoffbehältnissen bekannt. Die Vorrichtung ist mit einer Heizeinrichtung zum Erwärmen von Kunststoffvorformlingen und einer in einer Transportrichtung der Kunststoffvorformlinge der Heizeinrichtung nachgeordneten Umformungseinrichtung zum Umformen von Kunststoffvorformlingen zu Kunststoffbehältnissen ausgestattet. Die Vorrichtung ist ferner mit einer Transporteinrichtung ausgestattet, welche mittels einer Vielzahl von Transportelementen die Kunststoffvorformlinge vereinzelt durch die Heizeinrichtung transportiert. Die Vorrichtung weist eine Sperreinrichtung zum zeitweiligen Unterbrechen der Zuführung der Kunststoffvorformlinge an die Heizeinrichtung auf. Die Sperreinrichtung ermöglicht eine Unterbrechung der Zuführung für einzelne Kunststoffvorformlinge. Die Heizeinrichtung weist eine Vielzahl von Heizelementen zum Erwärmen einzelner Kunststoffvorformlinge oder Gruppen von Kunststoffvorformlingen auf.

Durch EP 2 284 120 A2 sind eine Vorrichtung und ein Verfahren zum Behandeln von Behältnissen mit mehreren Behandlungseinheiten bekannt. Dabei wird bei der Vorrichtung und dem Verfahren ein Fehlerzustand in einem stromabwärts liegenden Behandlungselement erkannt und in Reaktion auf dieses Erkennen wird ein bestimmtes stromaufwärts geführtes Behältnis ausgesondert und zwar bevorzugt dasjenige Behältnis, welches in weiteren Arbeitsverlauf zu dem als fehlerhaft arbeitend bekannten Behandlungselement gelangen würde. Hierzu weist die Vorrichtung eine Sperreinrichtung auf, welche die Zufuhr der Behältnisse an wenigstens eine Behandlungseinheit unterbricht.

Durch EP 0 237 459 A1 sind ein Streckblasverfahren und eine Streckblasvorrichtung zur Herstellung von gegen thermische Belastungen beständigen Polyäthylenterephthalatbehältern, wie Flaschen, bekannt.

Der vorliegenden Erfindung liegt daher die Aufgabe zugrunde, den Transportpfad der Vorformlinge, insbesondere auch im Hochleistungsbereich, zuverlässig zu blockieren.

Weiterhin ist es Aufgabe der Erfindung, das Anfahren der Maschine störungsfrei und wiederholgenau zu ermöglichen.

Diese Aufgaben werden durch Verfahren und Vorrichtungen nach den unabhängigen Ansprüchen erreicht. Vorteilhafte Ausführungsformen und Weiterbildungen sind Gegenstand der Unteransprüche.

Eine erfindungsgemäße Vorrichtung zum Transportieren von Kunststoffvorformlingen zu einer Streckblasmaschine weist eine Zuführeinrichtung, welche die Kunststoffvorformlinge zu einer Vereinzelungseinrichtung transportiert, welche in Transportrichtung vor der Streckblasmaschine angeordnet ist, auf, wobei die Zuführeinrichtung eine pneumatisch betätigbare Sperreinrichtung aufweist, die in einer ersten Stellung den Transportpfad der Vorformlinge freigibt und in einer zweiten Stellung den Transportpfad der Kunststoffvorformlinge blockiert, wobei die Sperreinrichtung von einem Zylinder betätigbar ist und das Ventil zur Ansteuerung des Zylinders in unmittelbarer Nähe des Zylinders angeordnet ist.

Unter in unmittelbarer Nähe angeordnet ist zu verstehen, dass Zylinder und zugehöriges Ventil direkt benachbart angebracht sind bzw. dass Zylinder und Ventil vorteilhafterweise sogar als Zylinder-Ventil-Einheit in einem gemeinsamen Gehäuse untergebracht sind.

Es ist somit möglich, den Abstand zwischen Zylinder und Ventil derart gering auszubilden, dass die Pneumatikverbindung zwischen Ventil und Zylinder extrem kurz ist. Im Stand der Technik sind stattdessen lange Pneumatikleitungen vorhanden, die mit unnötig viel Luft versorgt werden müssen, wodurch sehr viel Totraum erzeugt wird.

Weiterhin kann in unmittelbarer Nähe bedeuten, dass Zylinder und Ventil eine vorgegebene Positionierung nebeneinander haben, in der sie bevorzugt aneinander befestigt sind.

Vorteilhaft besteht zwischen dem Zylinder und dem Ventil eine Pneumatikverbindung, die kürzer als 30 cm, bevorzugt kürzer als 20 cm und besonders bevorzugt kürzer als 10 cm ist.

Weiterhin kann die Pneumatikverbindung sogar kürzer als 5 cm sein, da versucht wird, so viel Totraum wie möglich zu vermeiden. Die Pneumatikverbindung weist somit nach Möglichkeit gar keine Schläuche mehr zur Verbindung von Zylinder und Ventil auf, sondern entsteht allein durch das Anbringen dieser beiden Bauteile direkt nebeneinander.

Bevorzugt sind Zylinder und Ventil zusammen in einem Gehäuse als sogenannte Zylinder-Ventil-Einheit angebracht. Das ermöglicht eine einfache Installation und Wartung dieser beiden Bauteile. Weiterhin sind schnellere Reaktionszeiten und höhere Taktfrequenzen möglich.

Die Sperreinrichtung greift bevorzugt zwischen zwei benachbarte Vorformlingkörper ein. Bei einer weiteren bevorzugten Ausführungsform greift die Sperreinrichtung zwischen die Mündungen der Vorformlinge, insbesondere wie aus dem Stand der Technik bekannt, seitlich, d.h. senkrecht zu der Ebene, die von den Vorformlinglängsachsen aufgespannt wird. Alternativ ist die Sperreinrichtung aber auch derart angebracht, dass sie in Richtung der Vorformlinglängsachse durch die Öffnung am Ende der Mündung in den Vorformling einfahrbar ist.

Bei einer vorteilhaften Ausführungsform stützt die Zuführeinrichtung die Kunststoffvorformlinge zum Führen ab. Die Abstützung kann derart ausgebildet sein, dass der Kunststoffvorformling beispielsweise im Bereich seiner Mündung eine Nut aufweist, in die die Zuführeinrichtung eingreifen kann oder dass im Bereich der Mündung ein Vorsprung, beispielsweise in Form eines Sicherungsrings oder eines Tragrings, vorgesehen ist, welcher auf der Zuführeinrichtung aufliegt oder welcher von der Zuführeinrichtung umschlossen wird.

Es ist aber auch denkbar, dass der Vorformling alleine durch seine, beispielsweise V-förmige, Kontur auf einer Zuführeinrichtung aufliegt und somit geführt werden kann.

Die Zuführeinrichtung kann weiterhin in Form von Rollen, Schienen, Drähten, Tunneln oder ähnlichen Elementen, die ein Führen der Vorformlinge ermöglichen, ausgebildet sein. Ebenso ist es denkbar, dass der Vorformling nur von einer Schiene auf nur einer Seite abgestützt wird. Hierfür könnte er schräg transportiert werden.

Weiterhin ist die Sperreinrichtung vorteilhafterweise auf der Seite der Zuführeinrichtung angeordnet, auf der durch das Einführen der Sperreinrichtung zwischen zwei aufeinander folgenden Vorformlingen eine größere Lücke zwischen diesen beiden Vorformlingen erzeugbar ist. Die Seite bezieht sich insbesondere auf eine Abstützfläche. Insbesondere ist die größere Lücke in lotrechter Richtung unterhalb dieser Fläche erzeugbar.

Die Zuführeinrichtung ist bevorzugt derart angebracht, dass oberhalb der Zuführeinrichtung die Mündung des Vorformlings und unterhalb der Vorformlingkörper ist.

Auf einer Seite der Zuführeinrichtung, bevorzugt oberhalb, ist dementsprechend die Mündung des Vorformlings angeordnet und auf der anderen Seite, bevorzugt unterhalb, der Vorformlingkörper.

Die beschriebene Seite kann beispielsweise unterhalb der Zuführschiene sein, sofern die Vorformlinglängsachse im Wesentlichen senkrecht (lotrecht) zur Horizontalen angeordnet ist und die Vorformlinge im Bereich ihrer Mündungen von der Zuführschiene abgestützt werden.

Es ist aber auch denkbar, die Vorformlinge im Wesentlichen parallel zur Horizontalen zu transportieren.

Eine größere Lücke ist auf der Seite des Vorformlings erzeugbar, auf der die Wände der Vorformlinge wegen ihrer Kontur weiter voneinander entfernt sind und/oder auf der sich die Vorformlinge durch das Einbringen des Sperrfingers weiter auseinander bewegen lassen. Dies ist beispielsweise, sofern die Vorformlinge im Bereich ihres Gewindes geführt werden, unterhalb der Zuführeinrichtung möglich, da die Vorformlinge im Bereich ihrer Mündung durch die Schienen und die aufgrund des Staudrucks unmittelbar anschließenden weiteren Vorformlinge in ihrer Bewegung sehr eingeschränkt sind. Unterhalb der Schiene hingegen ist keine seitliche Führung vorhanden bzw. lediglich eine auf Abstand angeordnete Führung, die ein Taumeln verhindert und die Körper sind auch nicht direkt aneinander angeordnet.

Weiterhin ist es vorteilhaft, wenn der Sperrfinger zwar unterhalb der Zuführeinrichtung angeordnet ist, aber trotzdem oberhalb des Schwerpunkts des Vorformlings.

Die Vorformlinge weisen üblicherweise im Bereich ihrer Mündung einen größeren Durchmesser auf als im Bereich ihres Körpers. Wenn nun zwei Vorformlinge mit ihren Längsachsen parallel zueinander transportiert werden und sich aufgrund des Staudrucks berühren, so ist der Abstand ihrer Außenoberflächen im Bereich der Mündung kleiner als im Bereich ihres Körpers.

Bei einer bevorzugten Ausführungsform ist das Ventil dezentral bezüglich einer zentralen Verteileinheit, die mindestens zwei weitere Ventile aufweist, angeordnet.

Unter dezentral ist zu verstehen, dass sich das Ventil zum Ansteuern des Sperrfingers nicht wie aus dem Stand der Technik bekannt, zusammen mit anderen Ventilen auf der zentralen Verteileinheit, beispielsweise einer zentralen ASI-Ventilinsel, befindet, sondern an einem anderen Ort angebracht ist. Dieser Ort befindet sich insbesondere abgesondert von der zentralen Verteileinheit. Bevorzugt ist das Ventil in der Nähe des zugehörigen Zylinders vorgesehen, besonders bevorzugt stellen Ventil und Zylinder eine Ventil-Zylinder-Einheit dar, damit die beiden Bauteile optimal verbunden werden können. Optimal verbunden sind sie, wenn die Pneumatikverbindung möglichst kurz ist. Lange Pneumatikleitungen zwischen Ventil und Zylinder erzeugen Totzeit, wobei die Totzeit bei einer kurzen Verbindung gegen Null geht.

Weiterhin ist unter dezentral zu verstehen, dass die elektrischen Leitungen zum Ansteuern dieses Ventils parallel zu den Leitungen der zentralen Verteileinheit bzw. zu anderen Ventilen verlaufen. Das Ventil hat demnach eine eigene pneumatische sowie eine eigene elektrische Versorgung bzw. Informationsversorgung.

Die beschriebene dezentrale Anordnung bietet demnach die Vorteile einer schnelleren Reaktion aufgrund der direkten Signalübertragung und eines geringeren Energieverbrauchs, weil der Totraum hinsichtlich der Pneumatikleitungen gegen Null geht.

Die anderen Ventile der zentralen Ventilinsel können beispielsweise zur Ansteuerung von einem Schienenabstand dienen, wenn Vorformlinge mit anderen Durchmessern verarbeitet werden sollen.

Vorteilhafterweise ist eine zentrale Signalverarbeitungseinheit direkt über ein Bussystem mit dem Ventil verbunden. Unter direkter Verbindung ist zu verstehen, dass keine weiteren dazwischen geschalteten Bauteile außer Kabel vorgesehen sind, über die das Signal zur Ansteuerung des Ventils geleitet wird. Dadurch ist es möglich, das Signal mit möglichst geringen Verzögerungen bzw. Streuungen an den Zielort zu bringen, um somit ein wiederholgenaues Schalten des Sperrfingers zu erzeugen.

Bei einer weiteren vorteilhaften Ausführungsform ist die zentrale Signalverarbeitungseinheit mit einer separaten Ausgangskarte ausgestattet, die direkt über ein Verbindungsmittel, wie beispielsweise ein elektrisches Kabel, mit dem Ventil verbunden ist.

Dadurch ist es möglich, gänzlich auf Bussysteme zur Übertragung zu verzichten, wodurch das Signal noch schneller am Zielort ankommt.

Eine weitere Vorrichtung zum Transportieren von Kunststoffvorformlingen zu einer Streckblasmaschine beinhaltet eine Zuführeinrichtung, welche die Kunststoffvorformlinge, welche jeweils eine Mündung und einen Körperbereich aufweisen, zu einer Vereinzelungseinrichtung transportiert, welche in Transportrichtung vor der Streckblasmaschine angeordnet ist, wobei die Zuführeinrichtung eine betätigbare Sperreinrichtung aufweist, die in einer ersten Stellung den Transportpfad der Kunststoffvorformlinge freigibt und in einer zweiten Stellung den Transportpfad der Kunststoffvorformlinge blockiert. Die Sperreinrichtung greift zwischen die Körperbereiche von zwei aufeinander folgenden Kunststoffvorformlingen ein.

Unter Mündung eines Vorformlings ist dabei jeweils das Ende des Vorformlings zu verstehen, welches zumindest zum Befüllen oder zum Einführen einer Reckstange oder zum Aufsetzen einer Blasdüse des geblasenen Behälters eine Öffnung aufweist. Des Weiteren versteht man unter Mündung den Bereich eines Vorformlings, welcher in einem späteren Blasformschritt nicht oder nur geringfügig verformt wird. Der Mündungsbereich des Vorformlings dient während des Transports dazu, die Vorformlinge von außen greifen zu können. Dies ist beispielsweise aufgrund einer Nut, die sich in einem Gewinde oder unter einem Gewinde oder ober- bzw. unterhalb eines Trag- bzw. Sicherungsrings befindet, möglich. Weiterhin sind aber auch im Mündungsbereich angeordnete Tragringe bzw. Sicherungsringe geeignet, um mit entsprechenden Transportmitteln zusammenzuwirken. Der Mündungsbereich des Vorformlings ist im Stand der Technik auch immer der Bereich, der in einer Erwärmungsvorrichtung nicht gezielt erwärmt wird. Ebenso wäre es vorstellbar, dass ein Gewinde selbst zum Transport dient. Es können in dieser Erfindung auch gewindefreie Vorformlinge eingesetzt werden.

Der Körperbereich eines Vorformlings hingegen ist der Bereich, der zunächst in einer Erwärmungsvorrichtung erwärmt wird, um anschließend im Blasrad geformt, insbesondere geblasen, insbesondere streckgeblasen, zu werden. Weiterhin ist der Körperbereich der Bereich, der ein geschlossenes Ende aufweist bzw. zumindest während oder nach dem Blasen, aber vor dem Befüllen des Behälters verschlossen wird.

Der Mündungsbereich wird zumindest zeitweise von einem offenen Ende abgeschlossen.

Erfindungsgemäß werden die Vorformlinge entweder derart transportiert, dass die Vorformlinglängsachsen im Wesentlichen senkrecht zur Horizontalen sind oder dass die Vorformlinglängsachsen im Wesentlichen parallel zur Horizontalen sind. In der ersten Variante werden die Vorformlinge von bevorzugt im Wesentlichen horizontal angeordneten Führungsschienen gehalten, wobei die Vorformlinge aufgrund der Schwerkraft auf den Schienen aufliegen.

Bei der zweiten Variante können die Führungsschienen im Wesentlichen vertikal angeordnet sein und bevorzugt kreisförmig, um die Vorformlinge aufgrund der Fliehkraft zusammen mit der Führungsschiene in einer im Wesentlichen horizontalen Position zu halten.

Bei einer weiteren Vorrichtung zum Transportieren von Kunststoffvorformlingen zu einer Streckblasmaschine ist eine Zuführeinrichtung vorgesehen, welche die Kunststoffvorformlinge zu einer Vereinzelungseinrichtung transportiert, welche in Transportrichtung vor der Streckblasmaschine angeordnet ist, wobei die Zuführeinrichtung mindestens zwei Flächen aufweist, wobei die erste Fläche den Vorformling hängend führt und die zweite Fläche den Vorformling seitlich abstützt. Zudem ist eine betätigbare Sperreinrichtung vorgesehen, die in einer ersten Stellung den Transportpfad der Kunststoffvorformlinge freigibt und in einer zweiten Stellung den Transportpfad der Kunststoffvorformlinge blockiert und die Sperreinrichtung ist abgewandt von der ersten Fläche angeordnet.

Unter hängend führen wird verstanden, dass die Vorformlinge einen Vorsprung, wie beispielsweise einen Tragring oder einen Sicherungsring aufweisen, oder eine Nut in oder unter ihrem Mündungsbereich haben, der dafür geeignet ist, mit einer ersten Fläche der Zuführeinrichtung derart zusammen zu wirken, dass die Vorformlinge auf der oder von der Zuführeinrichtung geführt werden. Dabei wirken immer entweder Schwerkraft oder Fliehkraft derart auf die Vorformlinge, dass sie die Zuführeinrichtung im Bereich ihrer ersten Fläche kontaktieren. Die seitliche Abstützfläche ist weiterhin dafür geeignet, die Vorformlinge in der gewünschten Position in Transportrichtung zu halten.

Die von der ersten Fläche abgewandte Seite ist die Seite der Zuführeinrichtung, auf der der Vorformling nicht aufliegt und die auch nicht dazu dient, den Vorformling seitlich zu führen.

Die Zuführeinrichtung kann den Vorformling auf der abgewandten Seite zwar auch berühren, allerdings wird der Vorformling durch die Schwerkraft oder Fliehkraft an die erste Fläche gedrückt.

Bei einem Verfahren zum Transportieren von Kunststoffvorformlingen zu einer Streckblasmaschine, wobei die Kunststoffvorformlinge von einer Zuführeinrichtung entlang eines Transportpfads zu einer Vereinzelungseinrichtung transportiert werden, ist eine Sperreinrichtung vorgesehen, die von einer ersten Stellung, in der der Transportpfad freigegeben wird, in eine zweite Stellung verfahren wird, um den Transportpfad zu blockieren. Erfindungsgemäß wird ein Signal zum Betätigen der Sperreinrichtung von einer zentralen Signalverarbeitungseinheit direkt über ein Bussystem oder ein mit einer separaten Ausgangskarte verbundenes Verbindungsmittel zu einem Ventil geleitet.

Bei einem weiteren Verfahren zum Transportieren von Kunststoffvorformlingen zu einer Streckblasmaschine werden die Kunststoffvorformlinge, welche jeweils eine Mündung und einen Körperbereich aufweisen, von einer Zuführeinrichtung entlang eines Transportpfads zu einer Vereinzelungseinrichtung transportiert. Weiterhin ist eine Sperreinrichtung vorhanden, die von einer ersten Stellung, in der der Transportpfad freigegeben wird, in eine zweite Stellung verfahren wird, um den Transportpfad zu blockieren. Erfindungsgemäß wird die Sperreinrichtung zwischen die Körperbereiche von zwei aufeinander folgenden Vorformlingen gefahren.

Der Sperrfinger wird im Wesentlichen senkrecht zu einer Ebene, die durch die Vorformlinglängsachsen aufgespannt wird, verfahren.

Vorteilhafterweise wird der Sperrfinger in einem Bereich zwischen der Mitte des Vorformlings hinsichtlich seiner gesamten Länge und der Zuführeinrichtung eingefahren.

Einer Zuführeinrichtung ist immer eine Sortiereinrichtung vorgeschalten, welche die Vorformlinge in Reihe bringt und mit dem Neck nach oben ausrichtet.

Bei einer derartigen Sortiereinrichtung kann es sich beispielsweise um einen Rollensortierer oder ein Scheibensortierer handeln.

Die Zuführeinrichtung ist entweder in einem Winkel zur Horizontalen angeordnet ist, wodurch der erforderliche Staudruck durch die hintereinander angeordneten Vorformlinge entsteht oder sie ist horizontal angeordnet ist und zusätzlich mit einer Antriebseinrichtung zum Antreiben der Kunststoffvorformlinge ausgestattet. Als Antriebseinrichtung kann beispielsweise ein Luftgebläse vorgesehen sein oder eine Kette mit Mitnehmern. Im ersten Fall kann der Endbereich der Zuführeinrichtung auch horizontal sein.

Bei einem Verfahren zum Transportieren der Kunststoffvorformlinge werden die Kunststoffvorformlinge stromabwärts der Vereinzelungsvorrichtung mit einer weiteren Transporteinrichtung entlang eines vorgegebenen Transportpfads transportiert und während dieses Transports mit einer Erwärmungseinrichtung erwärmt.

Vorteilhaft ist stromaufwärts der Sortiereinrichtung eine weitere Erwärmungseinrichtung vorgesehen, die die unsortierten Vorformlinge auf eine erste Temperatur bringt, die niedriger ist als die für die Blasformung benötigte Temperatur.

Vorteilhaft ist eine stromabwärts der Erwärmungseinrichtung angeordnete Behandlungseinrichtung vorgesehen, welche die Kunststoffvorformlinge zu Kunststoffbehältnissen umformt.

Dabei kann dieser Transport zu der Behandlungseinrichtung unmittelbar erfolgen, es wäre jedoch auch möglich, dass die Kunststoffvorformlinge zunächst zu einer anderen Einrichtung, wie beispielsweise einer Sterilisiereinheit transportiert werden und erst anschließend zu der Behandlungseinrichtung (d.h. insbesondere einer Blasformmaschine).

In der Sterilisiereinheit ist es möglich, dass im Arbeitsbetrieb die Kunststoffvorformlinge sterilisiert werden, was beispielsweise mittels Elektronenstrahlung oder auch mittels eines fließfähigen Sterilisationsmediums, wie beispielsweise Peressigsäure oder H₂O₂, erfolgen kann.

Vorteilhaft ist die Erwärmungseinrichtung mit der auf dem Transportpfad der Behältnisse nachgeordneten Maschine geblockt, d.h. wird in einem Arbeitsbetrieb insbesondere synchron mit dieser betrieben und es befindet sich kein Puffer zwischen den Vorrichtungen.

Bevorzugt ist der Erwärmungseinrichtung eine Vorrichtung zum Umformen von Kunststoffvorformlingen zu Kunststoffbehältnissen nachgeschaltet. Daneben können auch dieser Umformungseinrichtung weitere Maschinen nachgeschaltet sein, wie beispielsweise Sterilisationseinrichtungen, Fülleinrichtungen und dergleichen.

Insbesondere können zumindest Bereiche der Vorrichtung in einem Reinraum angeordnet sein. Zum Aufrechterhalten von Reinraumbedingungen auf Transportpfaden können sowohl Reinigungs- und/oder Sterilisationseinrichtungen zum Reinigen und/oder Sterilisieren der Behandlungselemente und des Reinraums selbst (dessen Wände) als auch Einrichtungen zum Aufrechterhalten eines Überdrucks im Reinraum vorgesehen sein. Der Reinraum erstreckt sich bevorzugt ab dem Bereich der Abfüllanlage, ab dem die Vorformlinge - zumindest im Inneren - steril sind bis zum Verschließen der geblasenen und abgefüllten Flaschen. Sollte eine Vorformlingherstellungsmaschine, insbesondere Spritzgussmaschine für Vorformlinge, der Heizeinrichtung vorgeschaltet sein, kann auch schon ab dieser der Reinraum beginnen und sich durch die Heizeinrichtung und die Blasmaschine erstrecken. In diesem Fall ist sowohl der Pfad für den normalen Arbeitsbetrieb als auch der Wiederverwendungspfad nach der Gruppierstation insbesondere komplett innerhalb des Reinraums angeordnet. Die Pfade können mit einer Einhausung versehen werden. Der Aussonderungspfad kann sich entweder auch durch eine Schleuse bis außerhalb des Reinraums erstrecken oder innerhalb des Reinraums in eine Senke führen, in welcher genügend Platz vorhanden ist.

Weiter Vorteile und Ausführungsformen ergeben sich aus den beigefügten Zeichen:
Darin zeigen:
   Fig. 1 Eine Darstellung einer Anlage zum Behandeln von Kunststoffvorformlingen nach dem Stand der Technik;
   Fig. 2 Eine Darstellung eines Kunststoffvorformlingstroms
   Fig. 2a Eine Darstellung des Eingriffbereichs des Sperrfingers nach dem Stand der Technik
   Fig. 2b Eine Darstellung des erfindungsgemäßen Eingriffbereichs der Sperrfingers
   Fig. 3 Eine Darstellung der erfindungsgemäßen Vorrichtung
   Fig. 4 Eine schematische Darstellung der Zusammenwirkung von Zuführeinrichtung und Kunststoffvorformling
   Fig. 5 Eine Darstellung des erfindungsgemäßen Zylinder-Ventil-Einheit
   Fig. 6 Eine Darstellung der zur Signalübertragung benötigten Bauteile nach dem Stand der Technik
   Fig. 7 Eine Darstellung der zur Signalübertragung benötigten Bauteile gemäß der vorliegenden Erfindung
   Fig. 8 Eine Darstellung der erfindungsgemäßen pneumatischen Ansteuerung der Zylinder-Ventil-Einheit

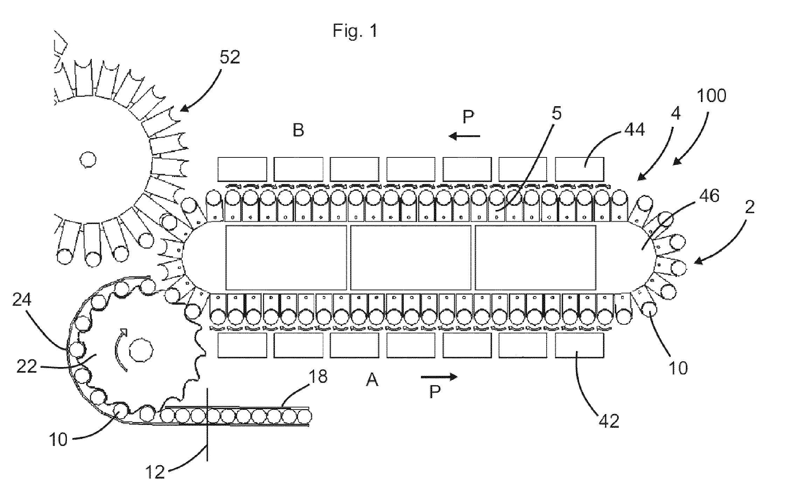

Fig. 1 zeigt eine Darstellung einer Vorrichtung 1 zum Behandeln von Behältnissen nach dem Stand der Technik. Dabei werden zunächst unsortierte Kunststoffvorformlinge 10 in eine Zuführvorrichtung, wie z.B. einen Rollensortierer, eingegeben, worin sie sortiert und ausgerichtet werden, um schließlich in einer Zuführschiene 18 zu der Erwärmungseinrichtung 4 befördert zu werden, wobei sie am Ende der Zuführschiene 18 von einem Sägezahnstern 22 vereinzelt und auf einen definierten Abstand gebracht werden sowie in die Erwärmungseinrichtung 4 übergeben werden. Alternativ zum Sägezahnstern könnte auch eine Vereinzelungsschnecke angeordnet sein.

Anschließend werden die Kunststoffvorformlinge 10 in einer Förderstrecke bzw. entlang eines Transportpfades P durch eine Heizeinrichtung 4 gefördert, ehe sie in einer Umformungseinrichtung (nicht gezeigt) wie einer Blasstation weiterverarbeitet werden. Die Kunststoffvorformlinge 10 sind üblicherweise Spritzgussteile, die in der Heizeinrichtung 4 auf eine Umformtemperatur gebracht und anschließend in der Blasvorrichtung in die endgültige Form umgeformt werden. Jeder Kunststoffvorformling 10 ist bereits mit einer Mündung 12 ausgebildet, die im Wesentlichen der Mündung 12 des fertigen Behältnisses entspricht.

Die Kunststoffvorformlinge 10 in der Heizeinrichtung 4 werden dabei üblicherweise von einer Spindel gehalten, die drehbar in einem Kettenglied gelagert ist. Auf diese Weise können die Kunststoffvorformlinge 10 auch um ihre Längsrichtung gedreht werden.

In der Heizeinrichtung 4 werden mehrere Kettenglieder mit den darin gelagerten Spindeln verbunden und bilden so eine endlos umlaufende Kette, wie in Fig. 1 gezeigt. Das Bezugszeichen 5 kennzeichnet dabei ein einzelnes Kettenglied. An der jeweils außen liegenden Seite der geraden Längsseiten der Heizeinrichtungen befinden sich Heizelemente 42, 44, die den Kunststoffvorformlingen 10 mittels IR-Strahlung Wärme zuführen.

Alternativ können aber auch Heizelemente 42, 44 vorgesehen sein, die die Kunststoffvorformlinge mittels Mikrowellen- oder Laserstrahlen erwärmen, insbesondere rundlaufende Heizkammern oder Resonatoren ohne Kette.

Am Ende der Erwärmungsvorrichtung 4 ist eine Übergabevorrichtung, insbesondere ein Transferstern 52, zur Übergabe der Vorformlinge 10 an das Blasrad angeordnet. Dieser Transferstern 52 ist geeignet, die Vorformlinge 10 auf die Teilung des Blasrads zu bringen.

Aus Fig. 1 ist weiterhin ersichtlich, dass am Ende der Zuführschiene 18 ein Sperrfinger 20 vorgesehen ist, der geeignet ist, den Vorformlingstrom in der Zuführschiene anzuhalten, wenn die Erwärmungsvorrichtung 4 oder darauf folgende Behandlungseinrichtungen gestoppt wurden oder wenn keine weitere Vorformlingzufuhr gewünscht ist. Dieser Sperrfinger 20 greift dazu zwischen die Mündungen 12 von zwei aufeinanderfolgenden Vorformlingen 10.

Nach dem derzeitigen Stand der Technik werden beim Leerfahren oder Wiederanfahren der Heizeinrichtung 4 alle Kunststoffvorformlinge, die sich nach dieser Sperreinrichtung 20 befinden, also im Sägezahnstern 22 oder in der Heizeinrichtung 4 danach über einen Ausscheider im Transferstern 52 ausgestoßen. Das Bezugszeichen 24 kennzeichnet eine stationäre Wandung, die zum Transport der Kunststoffvorformlinge 10 durch den Sägezahnstern 22 dient.

Durch die ansteigenden Maschinenleistungen werden die Vorformlinge immer schneller durch die gesamte Maschine befördert, wodurch die Vorformlinge auch schneller durch die Zuführschiene transportiert werden. Das bedeutet, dass dem Sperrfinger immer weniger Zeit bleibt, um im richtigen Moment die Lücke 16 zwischen zwei Vorformlingmündungen 12 zu treffen.

Dadurch kommt es immer häufiger zu Problemen, weil der Sperrfinger 20 die Lücke 16 verpasst und stattdessen die Mündung 12 eines Vorformlings trifft und dadurch möglicherweise deformiert bzw. sogar aufspießt.

Die vorliegende Erfindung ermöglicht eine deutliche Reduzierung dieser Probleme, indem der Einsatz des Sperrfingers optimiert wird.

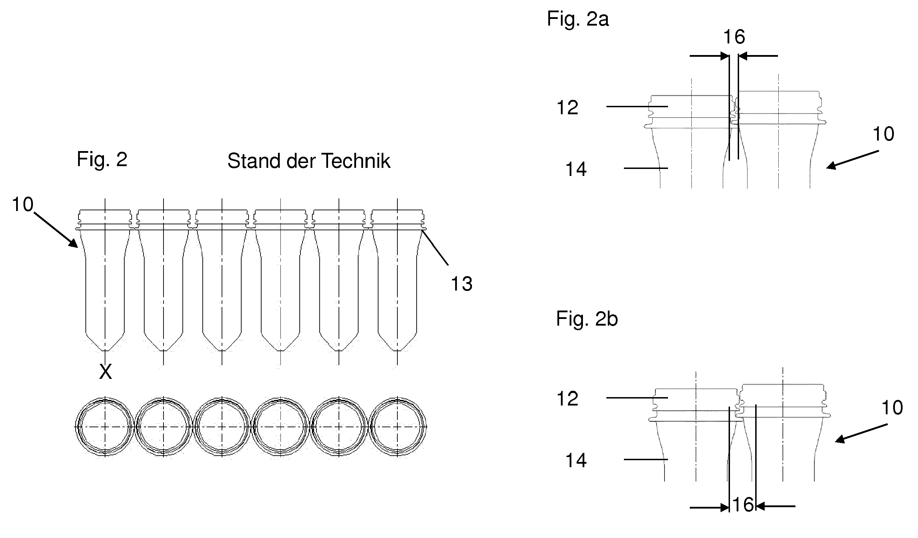

In Fig. 2 ist ein Vorformlingstrom dargestellt, wie er durch den erzeugten Staudruck in der Zuführschiene 18 auftritt.

Unter Vorformlingstrom ist dabei zu verstehen, dass mehrere Vorformlinge unmittelbar nacheinander angeordnet und sich insbesondere sogar berühren. Der benötigte Staudruck kann dabei erzeugt werden, indem die (nicht gezeigte) Zuführschiene 18 schräg angeordnet ist, sodass der Staudruck durch das Gewicht der aufeinander folgenden Vorformlinge 10 generiert wird.

Alternativ kann die Zuführschiene 18 auch im Wesentlichen horizontal angebracht sein, wobei dabei der Staudruck separat über eine (nicht gezeigte) Antriebsvorrichtung erzeugt wird. Das kann bevorzugt ein Luftstrom sein, der die Vorformlinge 10 in Richtung Sägezahnstern 22 drückt.

Durch den bereits erläuterten Staudruck werden die Vorformlinge 10 so nah wie möglich aneinander gedrückt, also bevorzugt so weit bis sich jeweils zwei benachbarte Tragringe 13 berühren. Es kann allerdings sogar passieren, dass sich zwei benachbarte Tragringe 13 übereinander positionieren, so dass die Lücke 16 zwischen zwei aufeinander folgenden Mündungen 12, die der Sperrfinger 20 treffen soll, immer kleiner wird (Siehe Fig. 2 a).

Da die Lücke derartig klein ist und die Maschinenleistung hingegen immer größer wird, hat man beispielsweise bei einer Leistung von 80000 Behälter/Stunde zum Treffen der Lücke nur noch ca. 5ms Zeit.

Bei sehr leichten bzw. sehr dünnwandigen Vorformlingen 10 besteht zudem die Gefahr, dass die Mündungen 12 deformiert bzw. durch den Sperrfinger 20 aufgespießt werden. Denn aufgrund der Führungsschiene 18 und der durch den Staudruck direkt benachbarten Vorformlinge 10 ist es für den Vorformling 10, der vom Sperrfinger 20 getroffen wird, nicht möglich, nach hinten bzw. vorne oder zur Seite auszuweichen. Zudem kann sich der Sperrfinger im Gewinde einhaken.

Aus Fig. 2b ist ersichtlich, dass eine wesentlich größere Lücke 16 zum Separieren zweier Vorformlinge 10 zur Verfügung steht, wenn der Sperrfinger 20 derart angeordnet ist, dass er zwischen zwei aufeinander folgende Vorformlingkörperbereiche 14 eingreifen kann. Dadurch steht eine wesentliche längere Zeit zum Einbringen des Sperrfingers 20 zur Verfügung und die Vorformlinge haben zudem an dieser Stelle mehr Platz zum Ausweichen zur Verfügung.

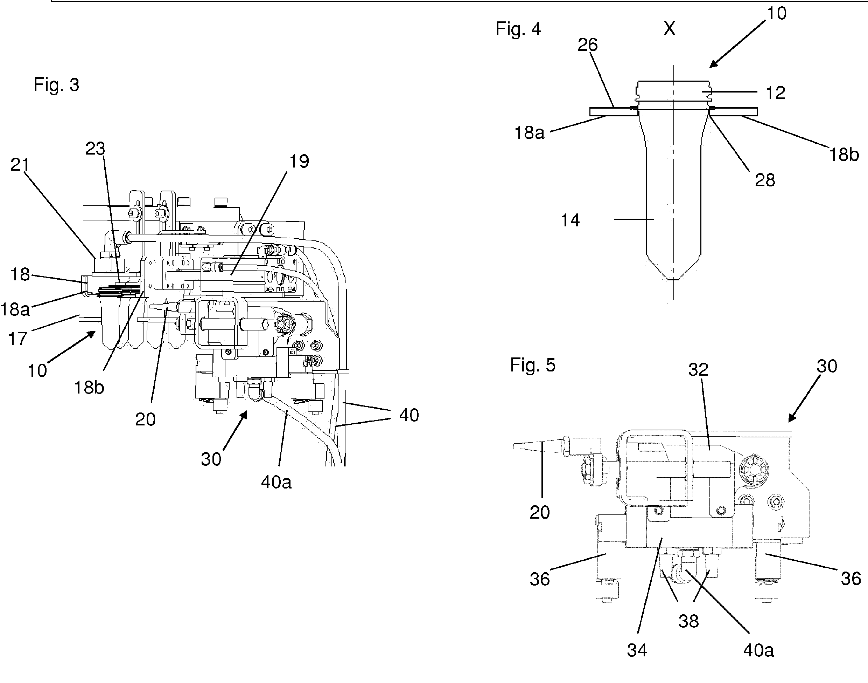

Fig. 3 zeigt das Ende der Zuführschiene 18, also den Übergangsbereich zum Sägezahnstern, in dem der Sperrfinger 20 angebracht ist. Dabei ist die Zuführschiene 18 aus zwei parallelen Schienenelementen 18a, b ausgebildet. Vorteilhaft ist der Abstand der beiden Schienenelemente 18a,b kleiner als der maximale Durchmesser des Tragrings 13 des jeweiligen Vorformlings 10, damit die Vorformlinge 10 mit ihrem Tragring 13 auf der Zuführschiene 18 aufliegen und so geführt werden können. Besonders bevorzugt ist der Abstand der beiden Schienenelemente 18a,b so gewählt, dass die Elemente möglichst nahe am Vorformlingkörper 14 angebracht sind, so dass ein ungewolltes Durchrutschen des Tragrings 13 verhindert wird. Um ein Aufsteigen der Vorformlinge 10 bzw. Verkeilen der Vorformlinge 10 mit der Zuführschiene 18 zu vermeiden, ist weiterhin bevorzugt ein Niederhalter 23 vorgesehen, der in einem kleinen Abstand, vorzugsweise weniger als 10mm, im Wesentlichen senkrecht zur Vorformlinglängsachse X über den Vorformlingen 10 angeordnet ist. Bevorzugt ist auch eine weitere Führung 17 beabstandet zu den Vorformlingkörpern 14 vorgesehen, die verhindert, dass die Vorformlinge 10 während des Transports taumeln können.

Allerdings ist es dennoch möglich, dass die Vorformlinge im Bereich ihrer Körper 14 mehr Bewegungsspielraum nach vorne, nach hinten sowie zur Seite haben, als im Bereich der Mündungen 12, da die Mündungen 12 dort unmittelbar nacheinander angeordnet sind und die Bewegung zudem durch die Führungsschiene 18 beschränkt wird.

Sollte es zu Verkeilungen im Übergangsbereich zwischen Zuführschiene 18 und Sägezahnstern 22 kommen, kann der Zylinder 19 das Schienenelement 18b vom Schienenelement 18a wegbewegen und so die verklemmten Vorformlinge 10 freigeben, so dass diese aus der Schiene 18 raus fallen. Um das Auswerfen der verklemmten Vorformlinge sicher zu stellen ist weiterhin eine pneumatische Auswerfeinrichtung 21 vorhanden, die die Vorformlinge von oben mit Druckluft beaufschlagt.

In Fig. 3 ist weiterhin die Zylinder-Ventil-Einheit 30 gezeigt, die den Sperrfinger 20 wiederholgenau betätigen kann. Der Sperrfinger 20 ist dabei bevorzugt unterhalb des Tragrings 13 bzw. unterhalb der Zuführschiene 18 angebracht. Weiterhin ist der Sperrfinger 20 derart angeordnet, dass er im Wesentlichen senkrecht zu einer Ebene, die durch zwei benachbarte Vorformlinglängsachsen X gebildet wird, verfahren werden kann.

Fig. 4 verdeutlicht weiterhin das Zusammenspiel von (einer schematisch dargestellten) Führungsschiene 18 und Vorformling 10. Die Führungsschiene 18 besteht dabei aus zwei Schienenelementen 18a,b, auf denen der Vorformling 10 hängend geführt wird. Jedes Schienenelement besteht dabei zumindest aus zwei Flächen, wobei eine erste Fläche 26, die den Vorformling 10 hängend führt und daher senkrecht zur Vorformlinglängsachse angebracht ist, vorgesehen ist. Weiterhin ist diese Fläche im direkten Kontakt mit einer Führungsfläche des Vorformlings 10, beispielsweise der Unterseite eines Tragrings 13 oder eines Sicherungsrings oder mit einer vergleichbaren Fläche einer Nut im Mündungsbereich 12 des Vorformlings. Die zweite Fläche 28 ist im Wesentlichen parallel zur Vorformlinglängsachse angeordnet und dient zum seitlichen Führen des Vorformlings 10 in Transportrichtung. Wenn beispielsweise ein Draht anstatt der Schiene eingesetzt wird, sind die Flächen dementsprechend klein.

Fig. 5 zeigt eine erfindungsgemäße Einheit bestehend aus dem Sperrfinger 20 und der zur Ansteuerung des Sperrfingers benötigten Zylinder-Ventil-Einheit 30.

Die Zylinder-Ventil-Einheit 30 besteht dabei aus dem Zylinder 32 und dem unmittelbar benachbarten Ventil 34, welches die Bewegung des Zylinders 32 auslöst. Das Ventil ist dabei bevorzugt derart nah am Zylinder 32 angebracht, dass der Totraum bzw. auch die die Zylinder und Ventil verbindenden Schlauchleitungen möglichst gering gehalten werden. Somit kann einerseits Druckluft eingespart werden und andererseits kann die Einheit sehr schnell reagieren.

Zur Ansteuerung des Ventils 34 sind ferner eine Pneumatikleitung 40a, die Druckluft zuführt, sowie Magnetspulen 36, die elektrische Signale weitergeben, direkt am Ventil 34 angebracht. Bezugszeichen 38 kennzeichnet daneben die Entlüftungen des Ventils.

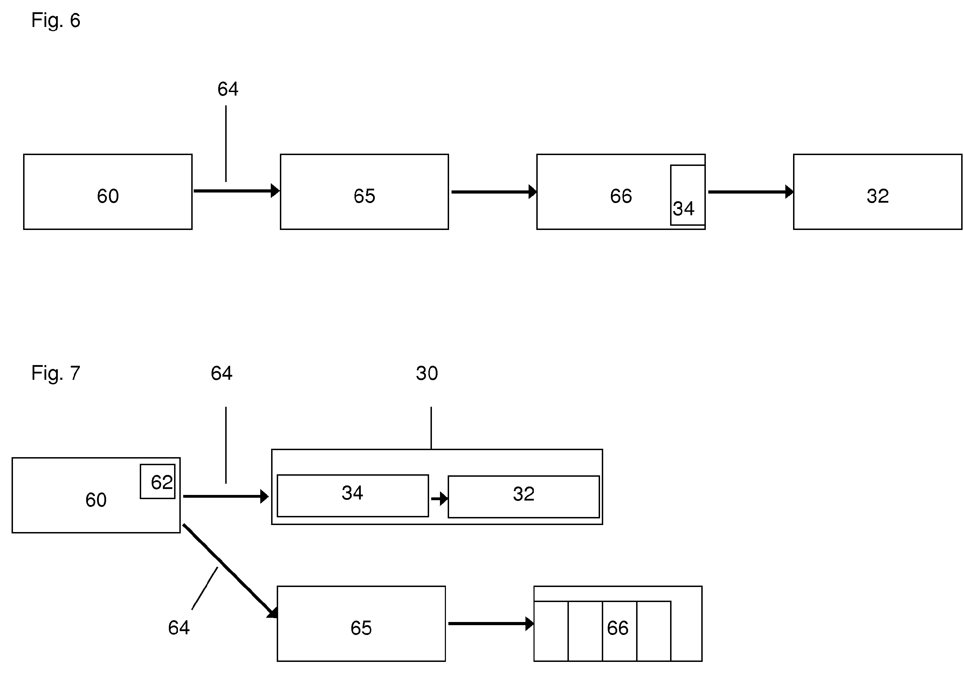

In Fig. 6 ist weiterhin schematisch die Signalübertragung zur Ansteuerung des Sperrfingers 20 im Stand der Technik dargestellt. Zunächst wird die Position des Sägezahnsterns als Signal in der zentralen Verarbeitungseinheit 60, bevorzugt in einer CPU, aufbereitet. Von dort wird das Signal über ein erstes Bussystem 64, welches beispielsweise ein Profinet-Bussystem ist, an ein zweites Bussystem 65, vorzugsweise ein ASI-Modul, weitergegeben. Das zweite Bussystem weist neben einer Master-Einheit 65 unter anderem eine zentrale Verteileinheit 66, beispielsweise eine ASI-Ventilinsel, auf, auf der mehrere Ventile angebracht sind. Das Signal wird somit von der Master-Einheit 65 zu der zentralen Verteileinheit 66 übertragen. Auf dieser zentralen Verteileinheit 66 ist unter anderem das Ventil 34 zur Ansteuerung des Zylinders 32 für den Sperrfinger 20 angebracht. Dieses Ventil ist über eine lange (nicht dargestellte) Pneumatikleitung 40 mit dem Zylinder verbunden, wodurch viel Totraum entsteht sowie ungünstigerweise Zeit verloren geht.

Weiterhin ist von Nachteil, dass beispielsweise die Ventile auf der ASI-Ventilinsel 66 nicht immer zur vorgegebenen Zeit schalten, sondern dass dort gewisse Streuungen, von beispielsweise 5ms, vorhanden sind, was die Wiederholgenauigkeit verschlechtert. Auch das im Stand der Technik eingesetzte Magnetventil 34 zur Ansteuerung des Zylinders 32 für den Sperrfinger 20 benötigt eine gewisse Zeit zur Reaktion (ca. 8ms).

Fig. 7 veranschaulicht die erfindungsgemäße Signalübertragung zur Ansteuerung des Sperrfingers 20.

Dabei wird im Gegensatz zur Fig. 5 das elektrische Signal aus der zentralen Signalverarbeitungseinheit 60 direkt über ein einziges Bussystem 64, vorzugsweise ein Profinetkabel, an das Ventil 34 der Zylinder-Ventil-Einheit 30 übermittelt. Vorteilhaft dabei ist, dass durch das Dezentralisieren der Signalkette bzw. durch das möglichst direkte Übermitteln des Signals von der zentralen Verteileinheit 66 zur Zylinder-Ventil-Einheit 30 die Wiederholgenauigkeit des Schaltens des Sperrfingers 20 deutlich verbessert wird.

Die Signalübertragung kann noch weiter verbessert werden, wenn das Signal aus der zentralen Verarbeitungseinheit 60, beispielsweise der CPU, über eine separate Ausgangskarte 62 direkt an das Ventil 34 der Zylinder-Ventil-Einheit 30 übertragen wird. Es wird dabei kein Bussystem 64 zur Übertragung benötigt, sondern lediglich ein elektrisches Kabel. Dadurch fallen auch noch die durch das Bussystem ausgelösten Schaltverzögerungen weg, wodurch die Wiederholgenauigkeit sowie Schnelligkeit des Systems zunimmt.

Die weiteren Ventile, die beispielsweise wie oben beschrieben in der Erwärmungsvorrichtung, unter anderem zum Auswerfen der Vorformlinge beim Einlauf in den Sägezahnstern, benötigt werden, können weiterhin auf einer ASI-Ventilinsel 66 angeordnet sein, die wie in Fig. 6 beschrieben über zwei Bussysteme 64, 65 angesteuert wird. Die Ansteuerung der ASI-Ventilinsel 66 verläuft dabei parallel zur Ansteuerung der Zylinder-Ventil-Einheit 30.

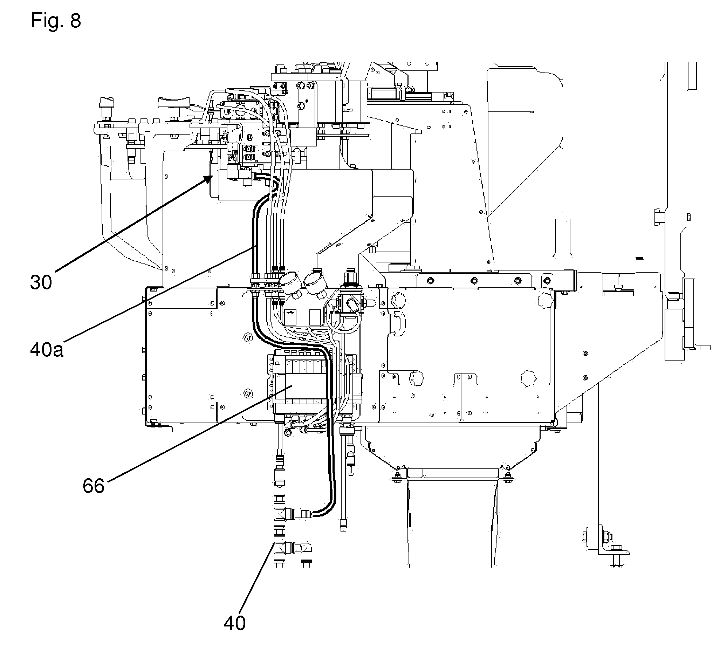

In Fig. 8 ist die erfindungsgemäße pneumatische Ansteuerung der Zylinder-Ventil-Einheit 30 dargestellt. Dabei wird die für die Vorrichtung 1 benötigte Druckluft über eine Pneumatikleitung 40 zur Vorrichtung 1 geleitet. Vor der zentralen Verteileinheit 66, auf der etliche Ventile angebracht sind, wird eine Pneumatikleitung 40a abgezweigt, die für die Druckluftversorgung der Zylinder-Ventil-Einheit 30 vorgesehen ist. Durch diese Dezentralisierung kann Druckluft gespart werden, da die Schlauchverbindung zwischen Ventil 34 und Zylinder 32 so gering wie möglich ausgebildet wird. Zudem reagiert die Zylinder-Ventil-Einheit 30 wesentlich schneller, da sie nicht mehr von den Streuungen bzw. Verzögerungen, die durch die zentrale Verteileinheit 66 ausgelöst werden, beeinflusst wird.

Auf der zentralen Verteileinheit 66 ist beispielsweise ein Ventil zur Ansteuerung des Zylinders 19 zur Verstellung der Zuführschiene 18 vorgesehen (vergleiche Fig. 3). Da die Verstellung der Zuführschiene 18 nur außerhalb des Betriebs der Maschine stattfindet, ist es hier nicht notwendig, dass das Schalten wiederholgenau und schnell durchgeführt wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Streckblasmaschine
- 2: Transporteinrichtung
- 4: Erwärmungseinrichtung
- 5: einzelnes Kettenglied
- 10: Vorformling
- 12: Mündung
- 13: Tragring
- 14: Körperbereich
- 16: Lücke
- 17: Führung
- 18: Zuführeinrichtung, Zuführschiene
- 18a,b: Schienenelemente
- 19: Zylinder
- 20: Sperrfinger, Sperrvorrichtung
- 21: Auswerfeinrichtung
- 22: Vereinzelungseinrichtung, Sägezahnstern
- 24: Wandung
- 26: erste Fläche
- 28: zweite Fläche
- 30: Zylinder-Ventil-Einheit
- 32: Zylinder
- 34: Ventil, Magnetventil
- 36: Magnetspule
- 38: Entlüftung
- 40: Pneumatikleitung
- 40a: Pneumatikleitung (für die Zylinder-Ventil-Einheit 30)
- 42, 44: Heizelemente
- 46: Umlenkung
- 52: Transferstern
- 60: zentrale Signalverarbeitungseinheit, CPU
- 62: separate Ausgangskarte
- 64: Bussystem, Profinet-Bussystem
- 65: Bussystem, ASI-Modul
- P: Transportpfad
- A, B: Heizstrecken
- X: Vorformlinglängsachse

## Patentansprüche

1. Vorrichtung zum Transportieren von Kunststoffvorformlingen (10) zu einer Streckblasmaschine (1) mit einer Zuführeinrichtung (18), welche die Kunststoffvorformlinge (10) zu einer Vereinzelungseinrichtung (22) transportiert, welche in Transportrichtung vor der Streckblasmaschine (1) angeordnet ist, wobei die Zuführeinrichtung (18) eine pneumatisch betätigbare Sperreinrichtung (20) aufweist, die in einer ersten Stellung den Transportpfad (P) der Kunststoffvorformlinge (10) freigibt und in einer zweiten Stellung den Transportpfad (P) der Kunststoffvorformlinge (10) blockiert, wobei die Sperreinrichtung (20) von einem Zylinder (32) betätigbar ist, **dadurch gekennzeichnet, dass** das Ventil (34) zur Ansteuerung des Zylinders (32) in unmittelbarer Nähe des Zylinders (32) angeordnet ist.

2. Vorrichtung nach Anspruch 1, **dadurch gekennzeichnet, dass** zwischen dem Zylinder (32) und dem Ventil (34) eine Pneumatikverbindung besteht, die kürzer als 30 cm, bevorzugt kürzer als 20 cm und besonders bevorzugt kürzer als 10 cm ist.

3. Vorrichtung nach wenigstens einem der vorangegangenen Ansprüche, **dadurch gekennzeichnet, dass** die Zuführeinrichtung (18) die Kunststoffvorformlinge (10) zum Führen abstützt und dass die Sperreinrichtung (20) auf der Seite der Zuführeinrichtung (18) angeordnet ist, auf der durch das Einführen der der Sperreinrichtung (18) zwischen zwei aufeinander folgenden Vorformlingen (10) eine größere Lücke zwischen diesen beiden Vorformlingen erzeugbar ist.

4. Vorrichtung nach wenigstens einem der vorangegangenen Ansprüche, **dadurch gekennzeichnet, dass** das Ventil (34) dezentral bezüglich einer zentralen Verteileinheit, die mindestens zwei weitere Ventile aufweist, angeordnet ist.

5. Vorrichtung nach wenigstens einem der vorangegangenen Ansprüche, **dadurch gekennzeichnet, dass** eine zentrale Signalverarbeitungseinheit (60) direkt über ein Bussystem (64) mit dem Ventil (34) verbunden ist.

6. Vorrichtung nach wenigstens einem der Ansprüche 1 - 4, **dadurch gekennzeichnet, dass** eine zentrale Signalverarbeitungseinheit (60) mit einer separaten Ausgangskarte (62) ausgestattet ist, die direkt über ein Verbindungsmittel, insbesondere ein elektrisches Kabel, mit dem Ventil (34) verbunden ist.

## Claims

1. An apparatus for transporting plastic preforms (10) to a stretch blow moulding machine (1) with a feeder device (18), which transports the plastic preforms (10) to a separating device (22), which is arranged in transport direction upstream of the stretch blow moulding machine (1), wherein the feeder device (18) has a pneumatically actuable blocking device (20), which in a first position deblocks the path of transport (P) for the plastic preforms (10) and in a second position blocks the path of transport (P) for the plastic preforms (10), wherein the blocking device (20) is actuable by means of a cylinder (32), **characterised in that** the valve (34) for controlling the cylinder (32) is arranged in the immediate vicinity of the cylinder (32).

2. The apparatus as recited in claim 1, **characterised in that** there is a pneumatic connection between the cylinder (32) and the valve (34), which pneumatic connection is shorter than 30 cm, preferably shorter than 20 cm, and particularly preferred shorter than 10 cm.

3. The apparatus as recited in at least one of the previous claims, **characterised in that** the feeder device (18) supports the plastic preforms (10) in the process of guiding them, and **in that** the blocking device (20) is arranged on that side of the feeder device (18) on which a larger gap is creatable between two consecutive preforms (10) when the blocking device (18) is inserted between these two preforms (10).

4. The apparatus as recited in at least one of the previous claims, **characterised in that** the valve (34) is arranged decentrally in relation to a central distribution unit, which has at least two further valves.

5. The apparatus as recited in at least one of the previous claims, **characterised in that** central signal processing unit (60) is directly connected with the valve (34) via a bus system (64).

6. The apparatus as recited in at least one of the claims 1 to 4, **characterised in that** the central signal processing unit (60) is equipped with a separate output card (62), which is directly connected to the valve (34) via a connection means, in particular via an electric cable.

## Revendications

1. Dispositif de transport de préformes en matière plastique (10) vers une machine d'étirage-soufflage (1), comprenant un dispositif d'alimentation (18) qui transporte les préformes en matière plastique (10) vers un dispositif de séparation (22) qui est disposé, dans la direction de transport, en amont de la machine d'étirage-soufflage (1), dans lequel le dispositif d'alimentation (18) comprend un dispositif de blocage (20) apte à être actionné de manière pneumatique qui, dans une première position, libère le trajet de transport (P) des préformes en matière plastique (10) et, dans une deuxième position, bloque le trajet de transport (P) des préformes en matière plastique (10), dans lequel ledit dispositif de blocage (20) peut être actionné par un vérin (32), **caractérisé par le fait que** la vanne (34) destinée à commander le vérin (32) est disposée à proximité immédiate du vérin (32).

2. Dispositif selon la revendication 1, **caractérisé par le fait qu'**entre le vérin (32) et la vanne (34) existe une liaison pneumatique qui est plus courte que 30 cm, de préférence plus courte que 20 cm et de manière particulièrement préférée plus courte que 10 cm.

3. Dispositif selon l'une au moins des revendications précédentes, **caractérisé par le fait que** ledit dispositif d'alimentation (18) appuie, pour le guidage, les préformes en matière plastique (10) et que le dispositif de blocage (20) est disposé du côté du dispositif d'alimentation (18) où, par l'introduction du dispositif de blocage (18) entre deux préformes (10) successives, une lacune plus importante peut être créée entre ces deux préformes.

4. Dispositif selon l'une au moins des revendications précédentes, **caractérisé par le fait que** ladite vanne (34) est décentralisée par rapport à une unité centrale de distribution qui présente au moins deux autres vannes.

5. Dispositif selon l'une au moins des revendications précédentes, **caractérisé par le fait qu'**une unité centrale de traitement de signaux (60) est connectée directement par l'intermédiaire d'un système de bus (64) à ladite vanne (34).

6. Dispositif selon l'une au moins des revendications 1 à 4, **caractérisé par le fait qu'**une unité centrale de traitement de signaux (60) est équipée d'une carte séparée de sortie (62) qui est reliée directement par l'intermédiaire d'un moyen de connexion, en particulier un câble électrique, à la vanne (34).
